# EUROPÄISCHE PATENTSCHRIFT

(11) **EP 1 648 672 B1**
(45) Veröffentlichungstag und Bekanntmachung des Hinweises auf die Patenterteilung: **07.02.2007**
(21) Anmeldenummer: 04726975.8
(22) Anmeldetag: 13.04.2004
(51) Int. Cl.: B29C 33/60, C08K 5/19, C08K 3/32

(54) **VERWENDUNG EINES TRENNMITTELS FÜR KUNSTSTOFFE**
USE OF A RELEASE AGENT FOR PLASTIC MATERIALS
UTILISATION D'UN AGENT DE SEPARATION POUR MATIERES PLASTIQUES

(30) Priorität: 31.07.2003 DE 10335577
(43) Veröffentlichungstag der Anmeldung: 26.04.2006
(73) Patentinhaber: Röhm GmbH, 64293 Darmstadt (DE)
(72) Erfinder: ITTMANN, Günther, 64283 Gross-Umstadt (DE)
(86) Internationale Anmeldenummer: PCT/EP2004/003868
(87) Internationale Veröffentlichungsnummer: WO 2005/021228

(56) Entgegenhaltungen:
- WO-A-99/16602
- GB-A- 2 031 914

## Beschreibung

### Gebiet der Erfindung

Die Erfindung betrifft interne Trennmittel für Kunststoffe. Als interne Trennmittel werden Stoffe oder Stoffgemische verstanden, die das Anhalten des fertig auspolymerisierten Kunststoffformkörpers an der Form verhindern.

### Stand der Technik

Es ist bekannt, Kunststoffplatten durch Polymerisation geeigneter Monomere und/oder Monomermischungen, die auch vorpolymerisiert als Sirupe vorliegen können, in Kammern mit Wänden aus Glasplatten, z.B. Floatglas, herzustellen.

Üblicherweise bilden die Glasplatten den Boden und die Decke der Kammer, die auf der Seite durch geeignete Mittel, wie beispielsweise Kederschnüre oder Bänder aus gegenüber dem Monomeren beständigen Material abgedichtet werden.

Die Produkte werden unter dem Namen Plexiglas^{®}GS von der Röhm GmbH & Co. KG in den Handel gebracht.

Ein bekanntes Problem bei der Gusspolymerisation ist der Glasbruch.
Unter Glasbruch versteht man den Bruch der Glasplatten beim Entformen der auspolymerisierten Kunststoffformkörper. Bei Glasbruch muss nicht nur die Glasscheibe aus Floatglas ersetzt werden, sondern die Produktionsanlage muss auch manuell von den entstandenen Glassplittern gereinigt werden. Darüber hinaus entsteht PMMA-Ausschuss. Die Produktion steht still.
Es sind mehrere Alternativen bekannt, den Glasbruch zu verhindern.

DE 198 32 018 beschreibt ein Verfahren zur Silanisierung von Formen, die eine Innenoberfläche aus Glas aufweisen. Die Silanisierung der Glasplatten gelingt durch Polymerisation einer polymerisierbaren Masse, die ein Silanisierungsmittel enthält. Die so erhaltene Polymerisatplatte wird recycelt, die silanisierten Glasplatten werden zur Polymerisation verwendet.

So ist beispielsweise in der US-PS 3 935 292 beschrieben, dass Formen, die eine Innenoberfläche aus Glas aufweisen, mit Siliconöl behandelt werden können. Hierzu wird die Glasoberfläche mit Siliconöl überzogen und anschließend auf 150°C-350°C erhitzt. Ein möglicher Überschuss an Siliconöl wird vor Gebrauch entfernt.
Dieses Verfahren birgt mehrere Nachteile in sich.
Zunächst kann die Haftung zwischen Glasplatte und dem Kunststoff nicht variiert werden. Dies führt zu Problemen bei der Handhabung der Glasplatten, aber auch zu einem schlecht kontrollierbaren Entformen der Kunststoffplatten, die fast von allein aus der Form gleiten. Daher ist die Verwendung der so silanisierten Glasplatten aus Gründen der Arbeitssicherheit problematisch. Hierbei ist zu beachten, dass die Verwendung einer geringeren Menge an Polysiloxan nicht zu einer Lösung dieser Probleme führen würde, da eine vollständige, d.h. geschlossene Polysiloxanschicht notwendig ist. Andernfalls würde die Schicht relativ schnell abgelöst werden. Das beschriebene Verfahren dient insbesondere zur Herstellung von Kontaktlinsen. Bei der Produktion solch kleiner Formkörper spielen diese Überlegungen kaum eine Rolle. Im Gegensatz hierzu weisen Kunststoffplatten einer Größe von ca. 2m*3m*1cm ein beträchtliches Gewicht auf, so dass die zuvor ausgeführten Argumente nicht zu vernachlässigen sind.
Ein weiterer Nachteil, der durch eine zu geringe Haftung auftreten kann, besteht darin, dass je nach angewendetem Polymerisationsverfahren die erhaltenen PMMA-Platten keine glatten Oberflächen aufweisen. Bei einer Polymerisation im Wasserbad werden die sogenannten Kederschnüre nach einer Vorpolymerisation entfernt, damit der Schrumpf nicht zu einer Ablösung des Kunststoffs von den Glasplatten führt. Falls die Haftung des Kunststoffs an den Glasplatten der Form zu gering ist, kann Wasser zwischen Glasplatte und Kunststoff eindringen, das eine glatte Oberfläche verhindert und so zu Ausschuss führt. Des weiteren ist das Verfahren diskontinuierlich, d.h. zur Silanisierung der Glasplatten muss eine zusätzliche Anlage oder Betriebsstätte zur Verfügung gestellt werden. Weitere Nachteile die hierdurch entstehen, sind in der Unterbrechung der Produktion zu sehen, die zum Einbau der silanisierten Glasplatten notwendig ist.

Um diesen Glasbruch zu vermeiden, setzt man der zu polymerisierenden Monomermischung ein internes Trennmittel zu, dieses Trennmittel soll das zu starke Anhaften des Kunststoffformkörpers am Glas verhindern.

Die Firma Axel stellt ein Trennmittel her und vertreibt es unter dem Namen Mold Wiz int AM 121 zur Verwendung als internes Trennmittel im Gussprozess zur Polymerisation von PMMA.
Das Mittel besteht aus Triethylamin und Mono- und Di (Octyl/Decyl/Dodecyl) phosphat (Gehalt: ca. 12 Mol%) und Isopropylfettsäureester (Gehalt: ca. 11 Mol%) gelöst in Benzylalkohol (65 Mol%).
WO 99/16602 beschreibt verbesserte, interne Trennmittel auf Basis von speziellen Ammonium- oder Metallsalzen von Phorphorsäureestem, Ammoniumsalzen von Carbonsäuren und/oder Ammonium- oder Metallsalzen von Sulfonsäuren für die Herstellung von zelligen oder kompakten, gegebenenfalls durch Glasfasern und/oder Naturfasern verstärkten Polyurethanformkörpem. Die nach dem erfindungsgemäßen Verfahren hergestellten Polyurethanformkörper können mit anderen Materialien kaschiert oder überzogen sein.

### Nachteile des Standes der Technik

Nachteilig am kommerziell erhältlichen Trennmittel ist der hohe Gehalt an dem teuren und oxidationsempfindlichen Benzylalkohol.

### Aufgabe und Lösung

Es bestand also die Aufgabe, ein inneres Trennmittel zu finden, das ohne den Lösungsvermittler Benzylalkohol und seine Nachteile auskommt.

Innere Trennmittel haben im Vergleich zu den im Stand der Technik bekannten externen Trennmitteln den Vorteil, dass sie in sehr geringen Konzentrationen der zu polymerisierenden Monomermischung zu gesetzt werden können.

Aufwendige Bearbeitungsschritte, wie das Auftragen des Trennmittels auf die Glasplatte, können entfallen.

Darüberhinaus sollte das zu findende Trennmittel toxikologisch unbedenklich sein. Es sollte sich ferner gut dosieren lassen.

### Lösung

Der Gegenstand der vorliegenden Erfindung ist die Verwendung einer Verbindung gemäß Anspruch 1 und ein Kunststoffformkörper gemäß Anspruch 4.

Es wurde gefunden, dass eine Verbindung der allgemeinen Formel I

Rₙ¹-PO₃^{⊖}(HN^{⊕}-R₃²)ₘ

wobei gilt:
n = 1 oder 2
m = 2 oder 1 und n + m = 3

Im Fall von m = 1 ist das Anion einfach negativ geladen. Im Fall von m = 2 ist das Anion zweifach negativ geladen,
R¹ = Methyl, Ethyl, Propyl, iso-Propyl, Butyl, iso-Butyl, Pentyl, Hexyl, Heptyl, Octyl, Nonyl, Decyl, Undecyl, Dodecyl
R² = Methyl, Ethyl, Propyl, iso-Propyl, Butyl
eingesetzt in Mengen von 0,001 - 0,5 Gew.-% in einer polymerisierbaren Monomermischung, eine gute Trennwirkung zeigt.

Als polymerisierbare Monomermischung kommen Methylmethacrylat und mit MMA copolymerisierbare Monomere in Betracht.
Polymerisierbare Monomermischungen sind tert. Zusammensetzungen, die ethylenisch ungesättige Monomere und/oder vorpolymerisierte Monomere (Sirupe) aufweisen. Bevorzugt weisen diese Zusammensetzungen Monomere oder Sirupe auf, die zur Herstellung sogenannter organischer Gläser oder Kunstgläser geeignet sind.

Zu den oben erwähnten ethylenisch ungesättigen Monomeren, die in den polymerisierbaren Monomermischungen enthalten sein können, gehören u. a. Vinylester, Ester der Acrylsäure, beispielsweise Methyl- und Ethylacrylat, Ester der Methacrylsäure, beispielsweise Methylmethacrylat, Butylmethacrylat und Ethylhexylmethacrylat, Vinylchlorid, Vinylidenchlorid, Vinylacetat, Styrol, substituierte Styrole mit einem Alkylsubstituenten in der Seitenkette, wie z.B. α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, und Diene, wie beispielsweise 1,3-Butadien und Divinylbenzol, bevorzugt sind Acrylester, Methacrylsäureester, Vinylacetat, Vinylchlorid, Vinylidenchlorid, Styrol, α-Methylstyrol, halogensubstituierte Styrole, Vinylether, Isopropenylether und Diene, ganz besonders bevorzugt ist Methylmethacrylat.

Ganz besonders bevorzugte Ausführungsformen des erfindungsgemäßen Verfahrens zeichnen sich dadurch aus, dass man als polymerisierbare Masse ein (Meth)acrylat-haltiges Harz mit der Zusammensetzung

| | |
|---|---|
| (Meth)acrylat (A) | 20 - 99,9 Gew.-%, |
| Comonomere (B) | 0 - 79,9 Gew.-%, |
| in (A) oder (B) lösliche Polymere (C) | 0 - 70,0 Gew.-% |
| und bezogen auf 100 Teile der oben genannten Komponenten Initiatoren | 0,005 - 5 Gew.-Teile |
| sowie weitere übliche Verarbeitungshilfsmittel einsetzt. | 0-10 Gew.-Teile |

(Meth)acrylat bezeichnet Acryl- und/ Methacrylverbindungen, wie diese beispielsweise zuvor genannt wurden. Comonomere sind Verbindungen, die mit (Meth)acrylaten copolymerisierbar sind. Hierzu gehören unter anderem die oben genannten Monomere, die kein (Meth)acrylat sind. Polymere, die gelöst in der polymerisierbaren Masse enthalten sein können, sind beispielsweise Polymerisate oder Mischpolymerisate der o.g. monomeren Bestandteile. Initiatoren und Verarbeitungshilfsmittel werden nachfolgend beschrieben.

Die oben genannten Monomere können auch als Mischungen sowie in vorpolymerisierter Form, als sogenannte Sirupe, eingesetzt werden.

Alle oben genannten Monomere sind kommerziell erhältlich. Sie können aber auch auf jede dem Fachmann bekannte Art hergestellt werden.

Die polymerisierbaren Massen können die üblichen Zusätze enthalten.

Beispielhaft seien folgende Zusatzstoffe genannt: Antistatika, Antioxidantien, weitere Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Die Zusatzstoffe werden in üblicher Menge, d. h., bis zu 80 Gew.-%, vorzugsweise bis zu 30 Gew.-%, bezogen auf die Gesamtmasse, eingesetzt. Ist die Menge größer als 80 Gew.-%, bezogen auf die Gesamtmasse, so können Eigenschaften der polymerisierbaren Masse, wie beispielsweise die Verarbeitbarkeit, gestört werden.

Erfindungsgemäß wird die polymerisierbare Masse in eine Form gegossen, die zumindest teilweise eine Innenoberfläche aus anorganischem Glas aufweist.

Unter Form sind alle Formen zu verstehen, die üblicherweise verwendet werden. Diese Form kann aus verschiedenen Teilen zusammengesetzt sein, wobei ein Teil der Form eine Glasoberfläche aufweist. Der Begriff "zumindest teilweise" sagt aus, dass der Anteil der Glasoberfläche, bezogen auf die gesamte innere Oberfläche der Form zumindest 10%, vorzugsweise mehr als 30% und ganz besonders bevorzugt mehr als 80% beträgt. Ist der Anteil der Glasoberfläche kleiner als 10%, so ist der erfindungsgemäße Vorteil, der aus der Verringerung des Glasbruches resultiert, zu vernachlässigen.

Eine bevorzugte Form umfasst beispielsweise zwei Glasplatten, eine Deckenplatte und eine Bodenplatte, die an den Seiten mit geeigneten Maßnahmen abgedichtet und getrennt werden, wie z. B. Bändern oder Kederschnüren. Die Glasplatten können beispielsweise mit Metallklammern zusammen gehalten werden und weisen beispielsweise eine Fläche von 2 m *3 m und eine Dicke von ca. 2 bis 20, vorzugsweise 3 bis 12 mm auf. Des weiteren sind auch sogenannte Mehrfachkammern, insbesondere Doppelkammern, bekannt, die einen schichtweisen Aufbau haben, wobei die mittleren Glasplatten auf beiden Seiten mit der polymerisierbaren Masse Kontakt haben.

Anorganische Gläser für die Formmaterialien umfassen insbesondere abgekühlte Schmelzen, die beispielsweise Siliciumdioxid (SiO₂), Calciumoxid (CaO), Natriumoxid (Na₂O) mit z.T. größeren Mengen von Bortrioxid (B₂O₃), Aluminiumoxid (Al₂O₃), Bleioxid (PbO), Magnesiumoxid (MgO), Bariumoxid (BaO), Kaliumoxid (K₂O) u.a. Zusätze enthalten können.

Nach dem Füllen der Form wird die polymerisierbare Masse unter Erhalt eines Formkörpers polymerisiert. Unter Polymerisation sind hierbei alle in der Fachwelt bekannten Verfahren zu verstehen, die in Masse erfolgen, wie etwa die Substanzpolymerisation, welche beispielhaft in Houben-Weyl, Band E20, Teil 2 (1987), S. 1145ff. beschrieben ist.

Die Polymerisation kann radikalisch sowie ionisch erfolgen, wobei die radikalische Polymerisation bevorzugt ist. Sie kann thermisch, durch Strahlen und durch Initiatoren erfolgen, wobei vorzugsweise Initiatoren verwendet werden, die Radikale bilden. Die jeweiligen Bedingungen der Polymerisation hängen von den gewählten Monomeren und dem Initiatorsystem ab und sind in der Fachwelt weithin bekannt.

Zu den bevorzugten Initiatoren gehören unter anderem die in der Fachwelt weithin bekannten Azoinitiatoren, wie AIBN bzw. 1,1-Azobiscyclohexancarbonitril, sowie Peroxyverbindungen, wie Methylethylketonperoxid, Acetylacetonperoxid, Ketonperoxid, Methylisobutylketonperoxid, Cyclohexanonperoxid, Dibenzoylperoxid, tert.-Butylperoxybenzoat, tert.-Butylperoxyisopropyfcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, 1,1-Bis(tert.-butylperoxy)cyclohexan, 1,1-Bis (tert.-butylperoxy)3,3,5-trimethylcyclohexan, Cumylhydroperoxid, tert.-Butylhydroperoxid, Dicumylperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Nach Erhalt des Formkörpers wird dieser entformt, d.h. er wird aus der Form genommen. Dieser Vorgang ist von der verwendeten Form abhängig und an sich in der Fachwelt bekannt.
Es wurde nun weiter gefunden, dass das Umsetzungsprodukt beispielsweise aus einem Gemisch aus Mono-(30-35 Gew.-%) und Di-(65-70 Gew.-%) nonylphosphat mit Triethylamin, eingesetzt als reines Produkt, neben einer ausgezeichneten Trennwirkung zeigt. Darüber hinaus ist das erfindungsgemäße Produkt säurestabil, diese Eigenschaft erlaubt seine Verwendung in Rezepturen, die saure Komponenten, wie z. B. Methacrylsäure, Acrylsäure oder Stearinsäure enthalten.

### Verwendung der erfindungsgemäßen Verbindung als Trennmittel

Die erfindungsgemäße Verbindung eignet sich als Trennmittel bei der Gusspolymerisation von MMA. Sie wird in Mengen von 0,001 - 7,5 Gew.-%, bezogen auf das Gesamtgewicht der zu produzierenden Mischung eingesetzt, bevorzugt in Mengen von 0,005 - 5 Gew.-% und ganz besonders bevorzugt in Mengen von 0,01 - 5 Gew.-%.

### 1. Herstellung des erfindungsgemäßen Produkts

1.600 g des Gemisches aus Mono-(30-35 Gew.-%) und Di-(65-70 Gew.-%) nonylphosphat (Zelec^{®} UN, Hersteller: DU PONT) werden in einem Reaktionskolben vorgelegt und 492,3 g Triethylamin wird unter Rühren zugetropft. Bei dieser exothermen Reaktion wird eine Temperatur von >50° C erreicht. Nach dem Zutropfen wird noch 30 Min. weitergerührt. Man erhält ein klares, leicht gelbstichiges Reaktionsprodukt.

### 2. Herstellung eines Methylmethacrylat (MMA)-PMMA-Sirups

MMA wird mit 0,07 Gew.-% Bis(4-tert.-Butylcyclohexyl)peroxydicarbonat versetzt und unter Rühren gelöst. 50 % der Lösung werden unter Rühren auf ca. 90° C erwärmt. Die anderen 50 % der Lösung werden zu der erwärmten Lösung in der Art zulaufen gelassen, dass eine Temperatur von 93° C nicht überschritten wird. Danach werden noch ca. 2-3 Min. nachreagieren lassen und danach der MMA-PMMA-Sirup auf Raumtemperatur schnell abgekühlt. Der Polymeranteil des Sirups beträgt ca. 20 % und dieser hat ein Molekulargewicht von ca. 170.000.

### Beispiele für die Verwendung des erfindungsgemäßen Produkts als Formtrennmittel

### Beispiel 1:

Mit 2 Silikatglasscheiben der Abmessung 40 x 50 cm und einer 3,6 mm dicken PVC-Rundschnur wird eine Kammer gebaut, die mit Metallklammern zusammengehalten wird. In den Innenraum dieser Kammer wird folgender Polymerisationsansatz gefüllt:

| | | |
|---|---|---|
| 0,05 Gew.-% | erfindungsgemäße Verbindung der Formel I, wobei | |
| | gilt: | n = 2 |
| | | m = 1 |
| | | R¹ = Methyl |
| | | R² = Ethyl |
| 0,08 Gew.-% | 2,2-Azobis-(isobutyronitril) | |
| 99,87 Gew.-% | MMA-PMMA-Sirup | |

Die Zusätze werden unter Rühren im MMA-PMMA-Sirup gelöst. Nachdem die Kammer verschlossen ist, wird die Polymerisation in einem Wasserbecken 17 h bei 45° C durchgeführt. Danach werden die Metallklammern und die Rundschnur entfernt und die Kammern 3 h bei 115° im Temperschrank auspolymerisiert. Nach dem Abkühlen auf Raumtemperatur wurden die Glasscheiben entfernt und die Entformung der Acrylglasscheibe von den Glasscheiben beurteilt.

### Beispiel 2: (Vergleichsbeispiel)

Es wurde verfahren wie in Beispiel 1 ohne Zusatz der erfindungsgemäßen Verbindung.

### Ergebnisse:

### 1. Beurteilung der Entformbarkeit der Acrylglasscheibe von den Silikatglasformscheiben.

### Beispiel 1:

Bei der Entfernung der Rundschnur lösten sich 2/3 des Acrylglases vom Formglas ab. Nach der Entnahme aus dem Temperschrank löste sich das restliche 1/3 der Acrylglasscheibe von selbst vom Silikatglas ab.

### Beispiel 2: (Vergleichsbeispiel)

Nach Entnahme der Kammer aus dem Temperschrank wurden beide Silikatglasscheiben von Acrylglas entformt, wobei ein typisches "Krachen" bemerkt werden konnte, was auf eine deutliche Haftung des Acrylglases an den Silikatglasscheiben schließen lässt.

## Patentansprüche

1. Verwendung der Verbindung
Rₙ¹PO₃^{⊖}(HN^{⊕}-R₃²)ₘ (I)
als Trennmittel bei der Gusspolymerisation von Methylmethacrylat-Mischungen, wobei gilt:
R¹ = Methyl, Ethyl, Propyl, iso-Propyl, Butyl, iso-Butyl, Pentyl, Hexyl, Heptyl, Octyl, Nonyl, Decyl, Undecyl, Dodecyl
R² = Methyl, Ethyl, Propyl, iso-Propyl, Butyl
n = 1 oder 2
m = 2 oder 1 und n + m = 3

2. Verwendung der Verbindung der Formel (I) gemäß Anspruch 1 in Mengen von 0,01 - 5 Gew.-%, bezogen auf das Gewicht der polymerisierbaren Monomeren oder Monomermischung aus (Meth)acrylaten und weiteren copolymerisierbaren Monomeren als Trennmittel.

3. Verwendung der Trennmittel nach Anspruch 1 zur Herstellung von Kunststoffformkörpern aus (Meth)acrylaten und weiteren copolymerisierbaren Monomeren.

4. Kunststoffformkörper aus (Meth)acrylaten und weiteren copolymerisierbaren Monomeren, enthaltend Verbindungen der Formel (I) gemäß Anspruch 1.

## Claims

1. Use of the compound
Rₙ¹PO₃^{⊖}(HN^{⊕}-R₃²)ₘ (I)
as release agent during the cast polymerization of methyl methacrylate mixtures, where:
R¹ = methyl, ethyl, propyl, isopropyl, butyl, iso-butyl, pentyl, hexyl, heptyl, octyl, nonyl, decyl, undecyl, dodecyl
R² = methyl, ethyl, propyl, isopropyl, butyl
n = 1 or 2
m = 2 or 1 and n + m = 3

2. Use of the compound of the formula (I) according to Claim 1 in amounts of 0.01 - 5% by weight, based on the weight of the polymerizable monomers or monomer mixture composed of (meth)acrylates and of further copolymerizable monomers, as release agent.

3. Use of the release agents according to Claim 1 for producing plastics mouldings composed of (meth)acrylates and of further copolymerizable monomers.

4. Plastics moulding composed of (meth)acrylates and of further copolymerizable monomers, comprising compounds of the formula (I).

## Revendications

1. Utilisation du composé Rₙ¹PO₃⁻(HN⁺-R₃²)ₘ (I) comme agent de séparation lors de la polymérisation par coulée de mélanges de méthacrylate de méthyle, où :
R¹ = méthyle, éthyle, propyle, iso-propyle, butyle, iso-butyle, pentyle, hexyle, heptyle, octyle, nonyle, décyle, undécyle, dodécyle
R² = méthyle, éthyle, propyle, iso-propyle, butyle
n = 1 ou 2
m = 2 ou 1 et n + m = 3

2. Utilisation du composé de formule (I) selon la revendication 1 en des quantités de 0,01 - 5% en poids, par rapport au poids des monomères polymérisables ou du mélange de monomères de (méth)acrylates et d'autres monomères copolymérisables comme agent de séparation.

3. Utilisation de l'agent de séparation selon la revendication 1 pour la préparation de corps moulés en matériau synthétique en (méth)acrylates et d'autres monomères copolymérisables.

4. Corps moulés en matériau synthétique en (méth)acrylates et d'autres monomères copolymérisables selon la revendication 1, contenant des composés de formule (I) selon la revendication 1.
